# FASCICULE DE BREVET EUROPEEN

(11) **EP 0 677 936 B1**
(45) Date de publication et mention de la délivrance du brevet: **18.09.1996**
(21) Numéro de dépôt: 95400837.1
(22) Date de dépôt: 12.04.1995
(51) Int. Cl.: H04J 14/02, H04B 10/20

(54) **Réseau de télécommunication organisé en boucles optiques multicolores reconfigurables**
Wiederkonfigurierbares optisches Mehrwellenlängen-Ringnetzwerk
Reconfigurable multiwavelength optical ring network

(30) Priorité: 13.04.1994 FR 9404394
(43) Date de publication de la demande: 18.10.1995
(73) Titulaire: FRANCE TELECOM, 75015 Paris (FR)
(72) Inventeur: Chawki, Mouhammad Jamil, F-94230 Cachan (FR); Tholey, Valérie, F-94230 Cachan (FR); Le Gac, Ivan, F-94230 Cachan (FR)
(74) Mandataire: Schmit, Christian Norbert Marie

(56) Documents cités:
- EP-A- 0 496 673
- IEEE INTERNATIONAL CONFERENCE ON COMMUNICATIONS, Mai 1993, GENèVE, CH pages 1245 - 1251 ELREFAIE 'Multiwavelength survivable ring network architectures'
- IEEE PHOTONICS TECHNOLOGY LETTERS, vol.5, no.12, Décembre 1993, NEW YORK US pages 1448 - 1451 GLANCE 'Large capacity local access network'
- IEEE INTERNATIONAL CONFERENCE ON COMMUNICATIONS, Mai 1993, GENEVE, CH pages 1245 - 1251 ELREFAIE 'Multiwavelength survivable ring network architectures'

## Description

L'invention concerne un réseau de télécommunication organisé en boucles optiques multicolores, c'est à dire un réseau en boucles optiques à multiplexage en longueur d'onde. Elle s'applique à tout type de réseau de télécommunication, à savoir aux réseaux de transmission publics ou privés. Ainsi, elle s'applique au réseau national et régional de télécommunication, aux réseaux locaux, aux réseaux téléinformatiques.

On entend par boucle optique, dans le domaine des télécommunications un ensemble de stations reliées entre elles par une ou plusieurs fibres optiques constituant le moyen de transport d'informations d'une station à une autre. Ces stations forment des noeuds de trafic variable. On entend par boucle optique multicolore une boucle de transfert d'informations dans laquelle une station transmet des informations à une autre station de la boucle sur une longueur d'onde donnée affectée à cette station, chaque station ayant une longueur d'onde de réception prédéterminée.

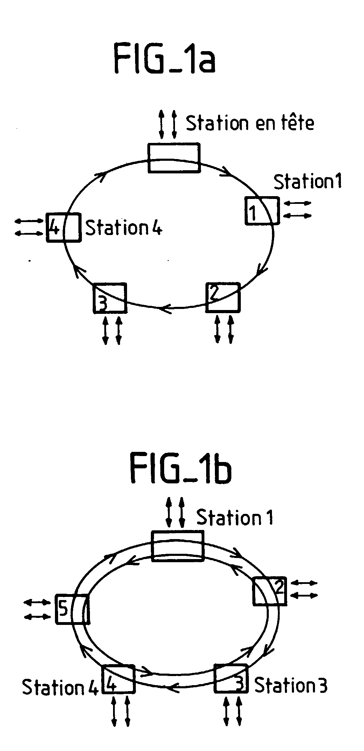

Les réseaux SDH (Synchronus Digital Hierarchy) utilisant la transmission sur fibres optiques sont organisés en boucles peuvent se présenter sous deux types d'architectures, une architecture unidirectionnelle telle que schématisée par la figure 1a, ou une architecture bidirectionnelle telle que schématisée par la figure 1b.

La boucle unidirectionnelle (Fig. 1a) comprend une station en "tête" de réseau reliée à plusieurs stations selon un sens bien défini. Chaque station peut extraire les informations qui lui sont destinées et insère d'autres informations qui seront transmises vers la tête du réseau. La fonction insertion/extraction est réalisée avec un Multiplexeur à insertion/extraction connu sous l'abréviation MIE ou ADM dans la littérature anglo-saxonne (Add/Drop Multiplexing).

La boucle bidirectionnelle (Fig. 1b) se distingue de la boucle unidirectionnelle par l'absence de station en tête ou centrale car chaque station est connectée à toutes les autres stations de la boucle (maillage). Cela est assuré par deux fibres distinctes où les informations circulent en sens opposé. De plus, ce type de boucle offre une meilleure sécurisation, car on utilise deux fibres de secours en plus des deux fibres opérationnelles.

Le transfert des informations dans la boucle se fait selon la hiérarchie de la norme SDH ou SONET au moyen d'une trame STM4 ou STM16 en fonction du nombre de stations de la boucle. Ainsi, dès que le nombre de stations est supérieur à 4, la trame utilisée est une trame STM16 à 2,5 Gbit/s obtenues par un multiplexage électrique temporel de 16 trames STM1 à 155 Mbit/s.

On constate que, lorsque le nombre de stations est compris entre 4 et 16, soit 7 par exemple, la trame STM16 comporte 9 trames vides. On constate donc que l'utilisation d'une trame à 2,5 Gbit/s n'est pas optimisée dans tous les cas. De plus, les équipements et en particulier les émetteurs/récepteurs pour une transmission à 2,5 Gbit/s sont très onéreux.

Avec l'introduction récente du parallélisme multicolore, c'est à dire du multiplexage en longueur d'onde dans ces architectures de réseau en boucle, on a obtenu une flexibilité supplémentaire en permettant de conserver la continuité optique à travers la boucle. On pourra se reporter pour mieux comprendre à l'article intitulé "Multiwavelength survivable ring network architectures" de A.F. Elrefaie de la publication ICC 93, Genève.

Pour la réalisation du multiplexage en longueur d'ondes, connu sous l'abréviation anglo-saxonne WDM (Wavelength-Division-Multiplexing), on utilise des multiplexeurs à insertion/extraction fréquentiels optiques à base de filtres acousto-optiques ou Fabry-Pérot ainsi que des guides en optique intégrée.

On pourra pour cela se reporter aux articles intitulés :
- "Wavelength-Division-Multiplexing Add/Drop multiplexer employing a novel polarisation independent acousto-optique tunable filter" de M. FUKUTOKU et Al., publié dans ELECTRONICS LETTRES, vol.29, pp 905-907, 1993.
- "An optical EDM-Add/Drop multiplexing ring Network utilizing Fiber Fabry-Pérot Filter and optical circulators" de K. ODA et Al. publié dans IEEE Photonics Technology Letters, vol.5, N° 7, 1993.
- "Arrayed-waveguide grating Add/Drop multiplexer with loop-back optical paths" de Y. TACHIKAWA et Al. publié dans ELECTRONICS LETTERS, vol.29, pp 2133-2134, 1993.

Une seule longueur d'onde est utilisée par station pour l'émission et la réception, et cette longueur d'onde est fixée une fois pour toutes.

Le principe de ces différentes architectures repose sur la suppression (la rejection) d'une longueur d'onde à chaque station lors de l'opération d'extraction d'informations afin de la remplacer lors de l'opération d'insertion par une autre de même valeur.

L'autre inconvénient lié au fait que l'on utilise une longueur d'onde par station (cette longueur d'onde étant fixée au préalable) réside dans le fait qu'il n'est pas possible avec cette technique de réaliser le partage de débit entre plusieurs stations.

Or, le demandeur a constaté que dans le cas où le trafic de deux ou plusieurs stations est faible, il serait alors intéressant de partager les données entre ces stations. D'une façon plus générale, il serait préférable de donner plus de souplesse pour la transmission sur de tels réseaux. Cette souplesse peut être obtenue selon l'invention en permettant une reconfiguration des boucles selon le trafic ou selon les pannes survenant dans les boucles du réseau.

La présente invention a pour objet un réseau de télécommunications organisé en boucles optiques multicolores reconfigurable.

Le réseau, selon l'invention, permet le partage de données entre deux ou plusieurs stations.

La présente invention a plus particulièrement pour objet un réseau de télécommunications organisé en boucles optiques à multiplexage en longueur d'onde permettant le transfert d'informations sous forme de trames synchrones ou suivant la norme SDH ou SONET dans laquelle une boucle optique comprend un ensemble de stations de trafic, principalement caractérisé en ce que chaque station comporte des moyens de réception accordables et accordés en fonction de la densité du trafic reçu par ces stations de sorte que deux ou plusieurs stations peuvent recevoir des données transmises sur une même longueur d'onde par une autre station.

Selon une autre caractéristique, lorsque deux ou plusieurs stations ont un trafic faible, transportable sur une même trame, ces stations comportent des moyens de réception accordés sur une même longueur d'onde, les stations partageant alors les données de la trame.

Selon une autre caractéristique, chaque station comporte des moyens d'émission, ces moyens émettant à une longueur d'onde différente de la longueur d'onde sur laquelle sont accordés les moyens de réception.

Selon une autre caractéristique, la boucle est unidirectionnelle, l'une des stations est la station tête de réseau; cette station comporte alors des moyens susceptibles d'émettre sur N longueurs d'ondes, si N est le nombre de stations de la boucle avec lesquelles elle communique; cette station comportant des moyens de réception susceptibles de recevoir sur N longueurs d'ondes, distinctes des longueurs d'ondes d'émission.

Les moyens d'émission et de réception de chaque station de la boucle comportent un multiplexeur à insertion/extraction fréquentiel optique comprenant un coupleur optique 2x2 placé sur une fibre, un filtre optique pour sélectionner l'information et qui est relié au coupleur, et un laser à insertion relié au coupleur également.

Selon une autre caractéristique, la boucle est bidirectionnelle, chaque station comporte des moyens d'émission susceptibles d'émettre sur (N-1)/2 longueurs d'ondes, si N est le nombre de stations dans la boucle et des moyens de réception susceptibles de recevoir sur (N-2)/2 longueurs d'ondes distinctes de longueur d'onde d'émission.

Les moyens d'émission et de réception comportent un multiplexeur à insertion/extraction fréquentiel optique par fibre, chaque multiplexeur comportant un coupleur optique, (N-1)/2 filtres d'extraction et (N-2)/2 lasers à insertion, soit au total pour les deux fibres (N-1) filtres et (N-1) lasers, N étant le nombre de stations dans la boucle.

D'autres avantages particuliers de la présente invention apparaîtront à la lecture de la description suivante qui est faite à titre d'exemple illustratif et non limitatif et en regard des figures sur lesquelles :
- les figures 1a et 1b représentent respectivement le schéma d'une boucle unidirectionnelle et d'une boucle bidirectionnelle,
- la figure 2a représente un schéma de principe d'un réseau R,
- la figure 2b représente le schéma de réalisation d'une boucle unidirectionnelle BO selon l'invention,
- la figure 3, représente un diagramme des longueurs d'ondes utilisées,
- les figures 4a et 4b représentent respectivement le schéma d'une boucle unidirectionnelle sans partage de données, et avec partage des données entre stations,
- la figure 5 représente un schéma de réalisation d'une boucle bidirectionnelle selon l'invention.

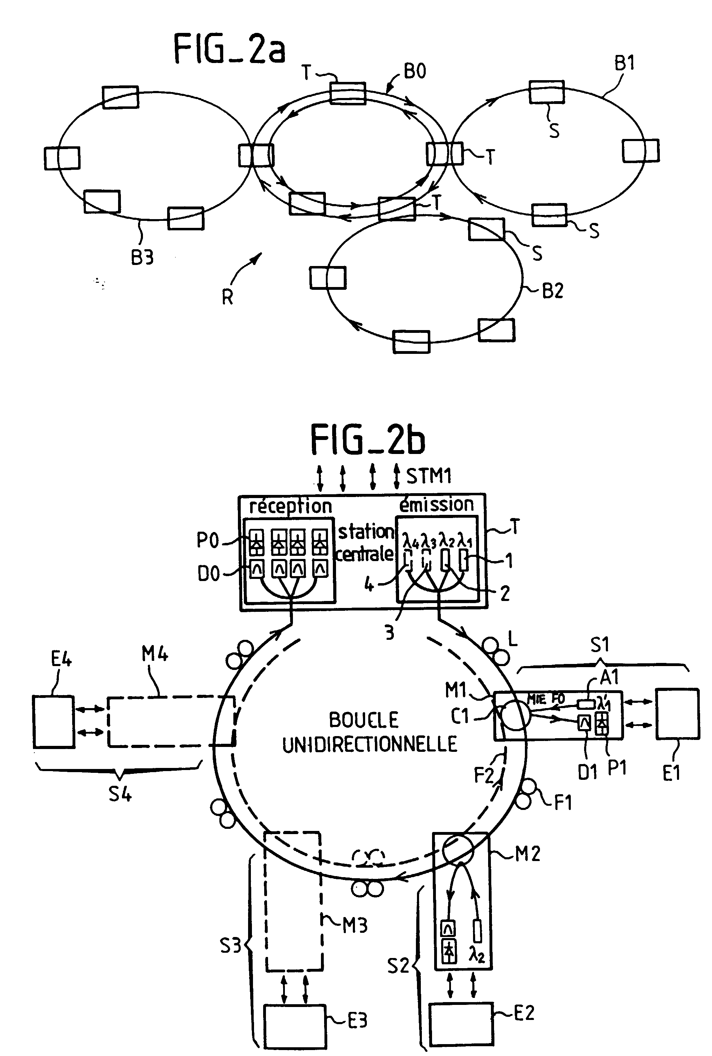

La figure 2a représente un schéma de principe d'un réseau R organisé en boucles optiques bidirectionnelles BO et unidirectionnelles B1-B3. Les stations T sont des stations de tête pour les boucles B1, B2, B3. Les autres stations portent la référence S.

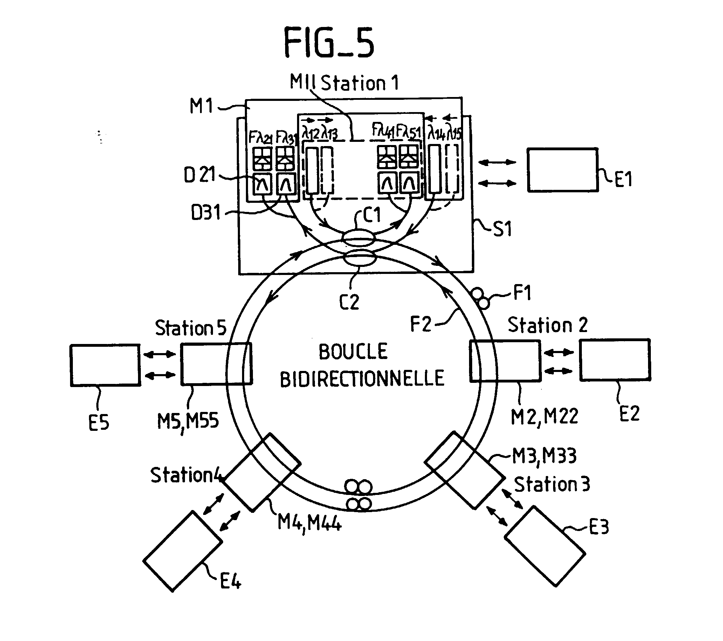

Ces boucles sont du type de celles qui vont être décrites à propos des figures 2b et 5.

La boucle multicolore unidirectionnelle représentée sur la figure 2b est constituée d'une station en tête T et de plusieurs stations S1 à S4 comprenant chacune un multiplexeur à insertion/extraction fréquentiel optique MIE-FO. La station en tête ou "centrale" est formée de plusieurs lasers 1, 2, 3, 4 émettant à des longueurs d'ondes différentes λ1, λ2, λ3, λ4, les informations à diffuser sous forme de STM1, 155 Mbit/s, ou STM4, 622 Mbit/s, (dans le cas de la norme SDH) vers les autres stations qui filtreront chacune de ces longueurs d'ondes.

Sur la figure 2b, la seconde fibre F2 sert à la sécurisation des transmissions et la première F1 sert à transporter les informations de la station T aux autres stations S1 à S4.

Chaque station comporte un multiplexeur à insertion/extraction fréquentiel optique (MIE-FO) M1, M2, M4 et des moyens électroniques de traitement E1-E4 tout à fait classiques assurant le traitement des données.

Le multiplexeur de la station 1 est formé d'un coupleur optique 2x2, C1 placé sur les fibres F1, F2, d'un laser pour insérer les informations dans la trame reçue et d'un filtre optique D1 accordable suivi d'un récepteur P1 pour extraire le débit destiné à la station. Chacun de ces éléments est de type connu. Le filtre est un filtre du type Fabry-Pérot. Le filtre D1 est relié à une branche du coupleur C1 tandis que le laser Al est relié à l'autre branche.

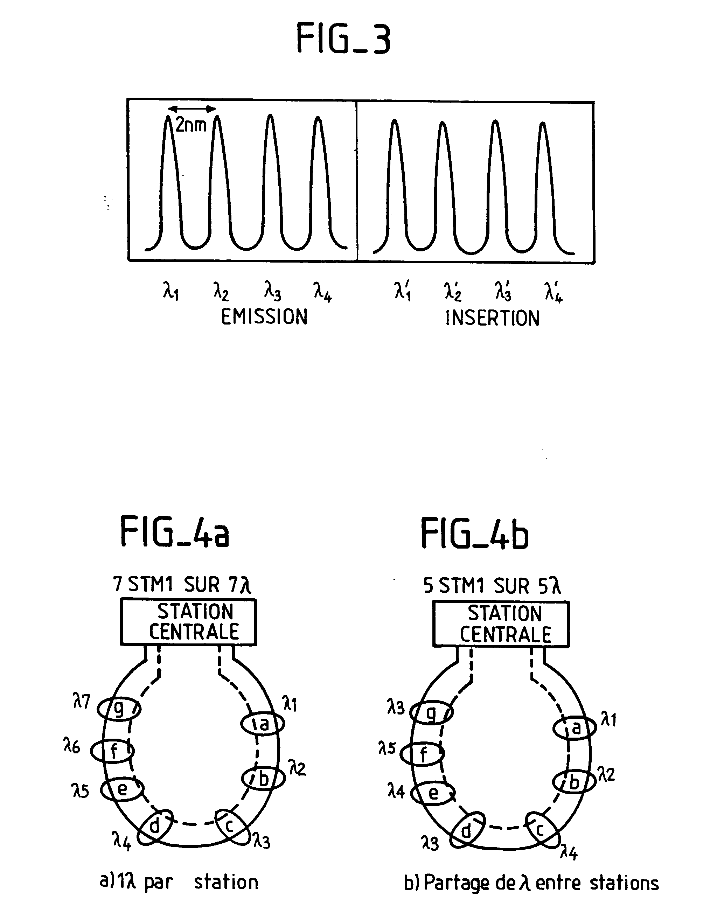

Les multiplexeurs des autres stations S1 à S4 sont identiques. Les lasers de ces stations émettent à des longueurs d'ondes pouvant être distinctes les unes des autres comme cela est représenté sur la figure 3 (longueurs d'ondes d'insertion sur le réseau λ1', λ'2 - λ'4).

La tête de station T comporte des moyens de réception comprenant autant de filtres optiques d'extraction DO que de stations émettrice placées sur la boucle. Ces moyens comportent en outre autant de détecteurs DO que de filtres.

Selon l'invention, les filtres optiques sont accordables, l'accord pouvant être modifié par exemple manuellement, lorsque le trafic de deux stations est faible.

Selon l'invention, le multiplexeur d'une station ne rejettent pas la longueur d'onde destinée à la station, les longueurs d'ondes insérées sont dans une fenêtre spectrale différente de celle utilisée à l'émission (cf. Fig. 3). Cela permet le partage d'une même longueur d'onde par plusieurs stations.

Le nombre de longueurs d'ondes émises dépend du trafic à écouler ainsi que du nombre de station dans la boucle.

En effet, si on prend le cas de 7 stations a, b, ... g, tel que représenté sur la figure 4a, si le trafic à écouler est important et que chaque station doit extraire un STM1, la capacité de la boucle sera donc de 7 STM1. En utilisant le multiplexage optique, la station centrale émettra sur 7 longueurs d'onde à 155 Mbit/s, une par station, au lieu d'émettre un STM16, soit 9 STM1 "vides" (ce qui est le cas actuellement). Par contre, si le trafic à écouler est peu important et qu'une capacité de 5 STM1 suffit pour 7 stations, Fig. 4b, la station centrale n'émettra que 5 longueurs d'ondes et deux stations se partageront un STM1. On peut ainsi selon l'invention réduire le nombre de sources lasers.

Dans le cas de la figure 4b, les filtres optiques contenus dans les stations c et e seront calés tous les deux sur λ4 et reçoivent donc les mêmes données. Ainsi, la boucle peut être reconfigurée en accordant les filtres optiques dans chaque station suivant la densité du trafic destiné à chaque station. Les filtres utilisés sont par exemple des filtres du type Fabry-Pérot.

On va maintenant décrire un boucle optique bidirectionnelle selon l'invention. Une telle boucle a été représentée sur la figure 5.

Selon ce deuxième type d'architecture le trafic est véhiculé sur deux fibres en sens opposés F1, F2. Cette configuration permet un maillage complet entre toutes les stations. En effet, la station S1 communique avec les stations S2 et S3 sur la fibre F1 à travers les longueurs d'ondes λ12 et λ13, et les longueurs d'ondes λ14 et λ15 utilisées pour les stations 4 et 5 seront véhiculées sur l'autre fibre F2. On pourra ainsi réutiliser les mêmes valeurs de longueurs d'ondes (λ12 = λ14 par exemple) puisque la fibre de transport est différente.

Le plan des longueurs d'ondes pour une boucle à 5 stations est présenté dans le tableau 1 qui suit. D'après ce tableau, pour assurer un maillage complet entre les stations, il faut 4 sources lasers par station, soit 20 lasers au total. Comme dans le premier type de boucle, chaque station utilise 2 MIE-FO, M1, M11 composé chacun respectivement de filtres optiques D21, D31, D41 et D51 associé à un coupleur 2x2 (C1, C2) dans le cas de la Fig. 5, on dispose de deux filtres par fibre.

Si par contre, le trafic à écouler entre les stations est peu dense, le nombre de lasers par station peut être diminué, ainsi une seule longueur d'onde pourra être émise vers deux stations. Les MIE-FO dans les deux stations réceptrices auront alors chacun un de leurs filtres calé sur la même longueur d'onde. Les données seront ainsi partagées et le nombre de lasers sera divisé par deux.

En cas de coupure des deux fibres opérationnelles, deux fibres de secours sont prévues pour les remplacer.

Sur la figure 5, D21 et D31 représentent les récepteurs reliés à la fibre F2 par le coupleur C2. D41 et D51 représentent les récepteurs reliés à la fibre F1 par le coupleur C1. A12 et A13 sont reliés à la fibre F1 par le coupleur C1. A14 et A15 sont reliés à la fibre F2 par le coupleur C2. Les moyens de réception des autres stations sont reliés aux coupleurs C1 et C2 placés sur les fibres F1, F2 de la même façon que décrite à propos de la station S1. Les moyens d'émission des autres stations sont reliés aux coupleurs C1, C2 placés sur les fibres F1 et F2 également de la même façon que décrite à propos de la station S1.

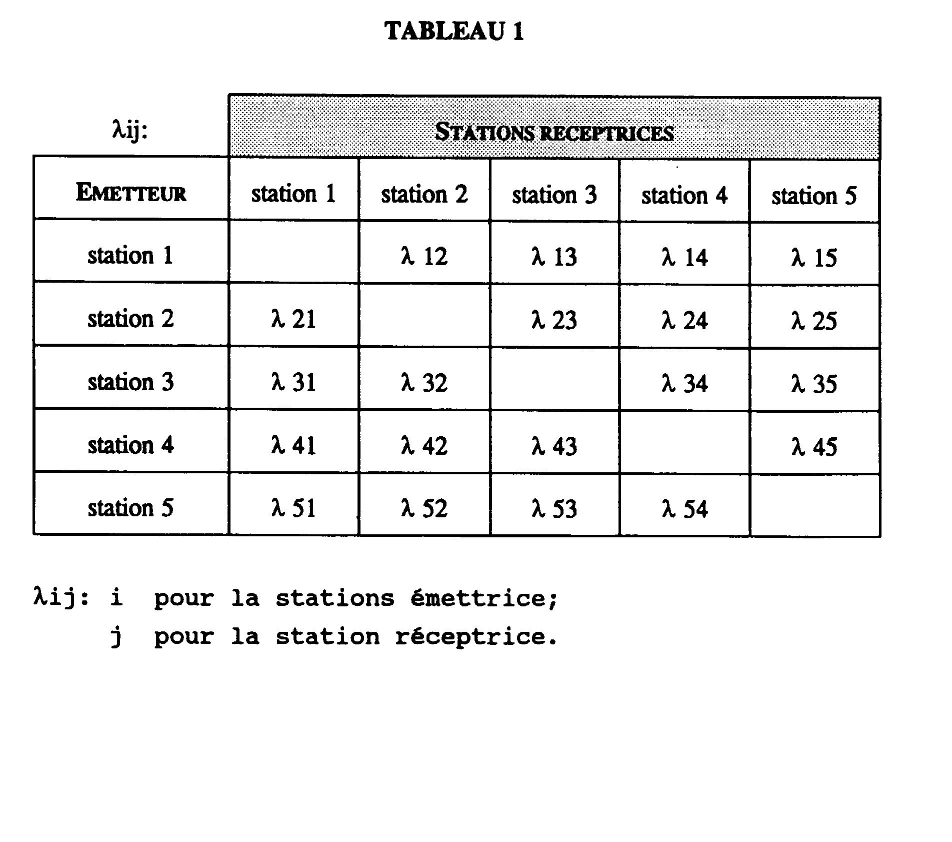

## Revendications

1. Réseau de télécommunication organisé en boucles optiques à multiplexage en longueur d'onde permettant le transfert d'information sous forme de trames synchrones ou suivant la norme SDH ou SONET dans lequel une boucle optique comprend un ensemble de stations de trafic (T, S), caractérisé en ce que dans une boucle chaque station comporte des moyens de réception fréquentiels optiques (M1, M2, ...) accordables et accordés en fonction de la densité du trafic reçu par ces stations de sorte que deux ou plusieurs stations peuvent recevoir des données transmises sur une même longueur d'onde par une autre station.

2. Réseau de télécommunication selon la revendication 1, caractérisé en ce que deux ou plusieurs stations (c, e) ayant un faible trafic transportable sur une même trame, ces stations comportent des moyens de réception accordés sur une même longueur d'onde, les station partageant alors les données de la trame.

3. Réseau de télécommunication selon la revendication 1 ou 2, caractérisé en ce que chaque station comporte des moyens d'émission et en ce que ces moyens d'émission émettent à une longueur d'onde différente de la longueur d'onde sur laquelle sont accordés les moyens de réception.

4. Réseau de télécommunication selon l'une quelconque des revendications précédentes dans lequel la boucle est unidirectionnelle et dans lequel l'une des stations est la station d'en-tête, caractérisé en ce que cette station comporte des moyens susceptibles d'émettre sur N longueurs d'ondes, si N est le nombre de stations de la boucle avec lesquelles elle communique et en ce qu'elle comporte des moyens de réception susceptibles de recevoir sur N longueurs d'ondes, distinctes des longueurs d'ondes d'émission.

5. Réseau de télécommunication selon la revendication 4, caractérisé en ce que les moyens d'émission et de réception de chaque station de la boucle comportent un multiplexeur à insertion/extraction fréquentiel optique comprenant un coupleur optique 2x2 placé sur une fibre, un filtre optique pour sélectionner l'information et relié au coupleur et un laser à insertion relié également au coupleur.

6. Réseau de télécommunication selon l'une quelconque des revendications 1 à 3, dans lequel la boucle est bidirectionnelle, caractérisé en ce que chaque station comporte des moyens d'émission susceptibles d'émettre sur (N-1)/2 longueurs d'ondes, si N est le nombre de stations dans la boucle et des moyens de réception susceptibles de recevoir sur (N-1)/2 longueurs d'ondes, distinctes des longueurs d'ondes d'émission.

7. Réseau de télécommunication, selon la revendication 6, caractérisé en ce que les moyens d'émission et de réception comportent un multiplexeur à insertion/extraction fréquentiel optique par fibre, chaque multiplexeur comportant un coupleur optique, (N-1)/2 filtres d'extraction et (N-1)/2 laser à insertion, soit N-1 filtres et N-1 laser pour les deux fibres de la boucle.

## Patentansprüche

1. Optisches Mehrwellenlängen-Telekommunikations-Ringnetzwerk für die Informationsübertragung in Form von synchronen Rastern oder gemäß der Norm SDH oder SONET, bei dem ein optischer Ring eine Gruppe von Verkehrsstationen (T, S) umfaßt,
**dadurch gekennzeichnet**,
daß in einem Ring jede Station optische frequenzabhängige Empfangseinrichtungen (M1, M2, ...) umfaßt, abstimmbar und abgestimmt in Abhängigkeit von der Dichte des durch diese Stationen empfangenen Verkehrs, so daß zwei oder mehrere Stationen Daten empfangen können, die durch eine andere Station auf derselben Wellenlänge übertragen werden.

2. Telekommunikationsnetzwerk nach Anspruch 1,
dadurch gekennzeichnet, daß eine oder mehrere Stationen (c, e) einen schwachen, auf ein und demselben Raster übertragbaren Verkehr haben, wobei diese Stationen Empfangseinrichtungen umfassen, die abgestimmt sind auf dieselbe Wellenlänge und diese Stationen sich dann die Daten des Rasters teilen.

3. Telekommunikationsnetzwerk nach Anspruch 1 oder 2,
dadurch gekennzeichnet, daß jede Station Sendeeinrichtungen umfaßt, und dadurch, daß diese Sendeeinrichtungen mit einer Wellenlänge senden, die verschieden ist von der Wellenlänge, auf die die Empfangseinrichtungen abgestimmt sind.

4. Netzwerk nach einem der vorangehenden Ansprüche, bei dem der Ring unidirektionell ist und bei dem eine der Stationen die Kopfstation ist, dadurch gekennzeichnet, daß diese Station Einrichtungen umfaßt, die auf N Wellenlängen senden können, wenn N die Anzahl der Stationen des Rings ist, mit denen sie kommuniziert, und dadurch, daß sie Empfangseinrichtungen umfaßt, die empfangen können auf N sich von den Sendewellenlängen unterscheidenden Wellenlängen.

5. Telekommunikationsnetzwerk nach Anspruch 4,
dadurch gekennzeichnet, daß die Sende- und Empfangseinrichtungen jeder Station des Rings einen optischen frequenzabhängigen Insertions-/Extraktions-Multiplexer enthalten, der einen an einer Faser angebrachten optischen Koppler 2x2 umfaßt, ein optisches Filter, um die Information zu selektionieren, verbunden mit dem Koppler, und einen Insertions-Laser, ebenfalls verbunden mit dem Koppler.

6. Netzwerk nach einem der Ansprüche 1 bis 3, wobei der Ring bidirektionell ist, dadurch gekennzeichnet, daß jede Station Sendeeinrichtungen umfaßt, die senden können auf (N-1)/2 Wellenlängen, wenn N die Anzahl der Stationen in dem Ring ist, und Empfangseinrichtungen , die empfangen können auf (N-1)/2 Wellenlängen, die sich von den Sendewellenlängen unterscheiden.

7. Telekommunikationsnetzwerk nach Anspruch 6, dadurch gekennzeichnet, daß die Sende- und Empfangseinrichtungen einen Multiplexer mit optischer frequenz abhängiger Insertion/Extraktion mittels Faser enhalten, wobei jeder Multiplexer einen optischen Koppler, (N-1)/2 Extraktions-Filter und (N-1)/2 Insertions-Laser umfaßt, also N-1 Filter und N-1 Laser für die beiden Fasern des Rings.

## Claims

1. Telecommunications network organised in optical wavelength-division-multiplexing loops allowing data to be transferred in the form of synchronous frames or in compliance with the SDH or SONET standard in which an optical loop comprises an array of traffic stations (T, S), characterised in that each station in a loop has optical frequency receiving means (M1, M2,...) tuned or tunable as a function of the density of the traffic received by these stations so that two or several stations can receive data transmitted on a same wavelength by another station.

2. Telecommunications network as claimed in claim 1, characterised in that where two or several stations (c, e) have a low traffic volume that can be carried on a same frame, these stations have receiving means tuned to a same wavelength such that the stations share the frame data.

3. Telecommunications network as claimed in claim 1 or 2, characterised in that each station has transmitting means and these transmitting means transmit at a different wavelength from the wavelength to which the receiving means are tuned.

4. Telecommunications network as claimed in any one of the preceding claims in which the loop is unidirectional and in which one of the stations is the head station, characterised in that this station has means capable of transmitting on N wavelengths where N is the number of stations in the loop with which it communicates and that it has receiving means capable of receiving on N wavelengths other than the transmission wavelengths.

5. Telecommunications network as claimed in claim 4, characterised in that the transmission and receiving means of each station in the loop have an optical frequency add/drop multiplexer comprising a 2x2 optical coupler located on a fibre, an optical filter linked to the coupler for selecting the data and an insert laser also linked to the coupler.

6. Telecommunications network as claimed in any one of claims 1 to 3, in which the loop is bi-directional, characterised in that each station has transmission means capable of transmitting on (N-1)/2 wavelengths where N is the number of stations in the loop and receiving means capable of receiving on (N-1)/2 wavelengths other than the transmission wavelengths.

7. Telecommunications network as claimed in claim 6, characterised in that the transmission and reception means have an optical frequency add/drop multiplexer using fibre comprising an optical coupler, (N-1)/2 extraction filters and (N-1)/2 insert lasers, i.e. N-1 filters and N-1 lasers for the two fibres in the loop.
